# EUROPÄISCHE PATENTSCHRIFT

(11) **EP 1 680 874 B1**
(45) Veröffentlichungstag und Bekanntmachung des Hinweises auf die Patenterteilung: **03.01.2007**
(21) Anmeldenummer: 04790827.2
(22) Anmeldetag: 25.10.2004
(51) Int. Cl.: H04B 7/185

(54) **ANORDNUNG UND VERFAHREN ZUR VERWENDUNG EINES MOBILTELEFONES AN BORD EINES LUFTFAHRZEUGS**
ARRANGEMENT AND METHOD FOR USING A MOBILE TELEPHONE IN AN AIRCRAFT
CONFIGURATION ET PROCEDE D'UTILISATION D'UN TELEPHONE MOBILE A BORD D'UN AERONEF

(30) Priorität: 23.10.2003 EP 03024455
(43) Veröffentlichungstag der Anmeldung: 19.07.2006
(73) Patentinhaber: Lufthansa Technik AG, 22335 Hamburg (DE)
(72) Erfinder: STARKE, Henry, 25747 Ellerbek (DE); MUIRHEAD, Andrew, 22846 Norderstedt (DE)
(74) Vertreter: Glawe, Delfs, Moll
(86) Internationale Anmeldenummer: PCT/EP2004/012041
(87) Internationale Veröffentlichungsnummer: WO 2005/041445

(56) Entgegenhaltungen:
- EP-A- 1 096 699
- US-A1- 2003 084 130
- US-A1- 2003 128 671

## Beschreibung

Die Erfindung betrifft eine Anordnung sowie ein Verfahren zur Verbindung eines an Bord eines Luft-, Land-, Wasser-oder Raumfahrzeugs befindlichen Mobiltelefons mit einem stationären Mobilfunknetz.

Die Verwendung von Mobiltelefonen an Bord von Flugzeugen ist gegenwärtig nicht möglich. Zum einen werden Wechselwirkungen mit den elektronischen Bordsystemen befürchtet, zum anderen sind insbesondere bei Langstreckenflügen über unbewohnte Gebiete oder Wasser keine Mobilfunknetze verfügbar, in die ein Mobiltelefon sich einbuchen könnte.

Gegenwärtig sind die Flugzeuge vieler Airlines mit proprietären Kommunikationssystemen ausgerüstet, die den Passagieren Sprach- und/oder Datenkommunikation während des Fluges erlauben. Diese Systeme sind in der Regel teuer in der Anschaffung, da sämtliche Sitze (oder zumindest Sitzreihen) mit entsprechenden Endgeräten ausgestattet werden müssen. Ferner fallen hohe Verbindungskosten an.

EP 1 096 699 A2 offenbart eine Möglichkeit, mit der innerhalb eines Flugzeugs benutzte Mobilendgeräte mit einem terrestrischen Mobilfunknetz in Kontakt treten können. Dazu wird innerhalb des Flugzeugs ein lokales W-LAN-Funknetz aufgebaut. Für den Gebrauch in Flugzeugen werden mobile Endgeräte vorgeschlagen, die sowohl den W-LAN als auch den GSM-Standard umfassen und bei den die GSM-Bestandteile während des Fluges abgeschaltet werden.

Der Erfindung liegt die Aufgabe zugrunde, eine Anordnung und ein Verfahren der eingangs genannten Art zu schaffen, die eine einfache Kommunikation von Insassen eines Fahrzeugs mit externen Personen, Computern oder dergleichen ermöglichen.

Die Erfindung löst diese Aufgabe durch eine Anordnung, die aufweist:
- an Bord eines Fahrzeugs:
   a) wenigstens eine Mobilfunk-Basisstation ,
   b) eine Einrichtung zum Konvertieren der Mobilfunk-Daten in das IP-Protokoll und umgekehrt,
   c) eine Einrichtung zum Senden/Empfangen von IP-Daten an eine/von einer Bodenstation,
- stationär:
   d) eine Einrichtung zum Senden/Empfangen von IP-Daten an eine/von einer entsprechenden Einrichtung des Fahrzeugs,
   e) eine Einrichtung zum Konvertieren der IP-Daten in Mobilfunk-Daten und umgekehrt,
   f) eine Einrichtung zum Senden/Empfangen der Mobilfunk-Daten an das/von dem stationären Mobilfunknetz.

Das erfindungsgemäße Verfahren weist folgende Schritte auf:
aa) Einloggen des Mobiltelefons in eine lokale Mobilfunkzelle, die von einer an Bord des Fahrzeugs angeordneten Mobilfunk-Basisstation gebildet wird;
bb) Konvertieren der Mobilfunk-Daten in das IP-Protokoll und umgekehrt;
cc) Senden/Empfangen der IP-Daten an eine/von einer Bodenstation;
ee) Konvertieren der IP-Daten in Mobilfunk-Daten und umgekehrt;
ff) Senden/Empfangen der Mobilfunk-Daten an das/von dem stationären Mobilfunknetz.

Zunächst seien einige im Rahmen der Erfindung verwendete Begriffe erläutert. Die Erfindung ist für Fahrzeuge aller Art verwendbar. Besonders bevorzugt kann sie bei Luft- oder Wasserfahrzeugen verwendet werden, die sich auch außerhalb der Reichweite stationärer Mobilfunknetze aufhalten. Sie kann auch für Landfahrzeuge wie beispielsweise Eisenbahnen verwendet werden, die durch dünn besiedelte und daher von den Mobilfunknetzen schlecht abgedeckte Gebiete fahren und/oder bei denen Probleme aufgrund Faraday'scher Abschirmung des Fahrzeuginneren auftreten. Raumfahrzeuge sind Fahrzeuge, die sich außerhalb der Erdatmosphäre bewegen.

Stationäre Mobilfunknetze sind die üblichen landgestützten Mobilfunknetze, bei denen eine große Zahl stationärer Basisstationen Mobilfunkzellen bildet. Es kann sich um GSM-, UMTS- oder Mobilfunknetze nach anderen üblichen Standards handeln. Bevorzugt handelt es sich um digitale Mobilfunknetze, bei denen die Mobilfunk-Daten in digitaler Form übermittelt werden.

Erfindungsgemäß ist an Bord des Fahrzeugs eine (oder gegebenenfalls mehrere) Mobilfunk-Basisstationen angeordnet. Diese bildet im Fahrzeuginneren eine lokale Mobilfunkzelle, in die sich Mobiltelefone der Fahrzeuginsassen einbuchen können. Die Kapazität der Basisstation, d. h. die Zahl der maximal einbuchbaren Mobiltelefone, wird an die erwartete Zahl von gleichzeitig telefonierenden oder datenübertragenden Fahrzeuginsassen angepasst. Da beispielsweise in Flugzeugen die Mobilfunk-Basisstation mit der zugehörigen Antenne in unmittelbarer Nähe der Passagiere und ihrer Mobiltelefone angeordnet ist, können die Mobiltelefone mit sehr geringer Leistung senden, so dass Wechselwirkungen mit der übrigen Bordelektronik minimiert sind. Gegebenenfalls kann die übrige Bordelektronik zusätzlich abgeschirmt werden.

Erfindungsgemäß werden die von der Basisstation empfangenen Mobilfunk-Daten in das IP-Protokoll konvertiert. Das IP-Protokoll ist das dem Fachmann geläufige Datenprotokoll des Internets.

Diese IP-Daten werden dann von einer entsprechenden Einrichtung zu einer Bodenstation gesendet. Es kann sich um eine über beispielsweise Satelliten vermittelte Verbindung mit einer Bodenstation handeln. Ein besonderer Vorteil liegt darin, dass Funkverbindungen zur Übermittlung von IP-Daten in Flugzeugen bereits vorhanden bzw. in der Installation begriffen sind. Diese IP-Verbindungen dienen zum einen der Kommunikation der Bordsysteme mit beispielsweise Überwachungseinrichtungen am Boden und ermöglichen zum anderen den Passagieren eines Flugzeugs den Internetzugang an Bord. Ein entsprechendes System zur Herstellung einer IP-Verbindung zwischen Flugzeug und Boden wird beispielsweise von der Firma Boeing unter der Bezeichnung Connexion angeboten.

Die Erfindung kann daher diese sowieso vorhandene bzw. aus anderen Gründen zu installierende IP-Datenverbindung zwischen Flugzeug und Bodenstation zur kostengünstigen Übertragung auch von Mobilfunk-Daten im IP-Format nutzen.

In einer Bodenstation werden die IP-Daten wieder in Mobilfunk-Daten (beispielsweise GSM- oder UMTS-Daten) rückkonvertiert. Zum "Filtern" der entsprechenden Daten aus den gesamten IP-Daten können im Stand der Technik bekannte und dem Fachmann geläufige IP call manager verwendet werden, die für die Internet-IP-Telefonie bereits in Verwendung sind.

Die rückkonvertierten Mobilfunk-Daten werden dann von einer entsprechenden Einrichtung der Bodenstation in das stationäre Mobilfunknetz eingespeist. Zu diesem Zweck kann entweder eine Leitungsverbindung mit dem Betreiber des Mobilfunknetzes bestehen, jedoch können auch einfach entsprechende Mobilfunkstationen verwendet werden, die für das Mobilfunknetz das an Bord des Fahrzeugs befindliche Mobiltelefon gewissermaßen simulieren. Entsprechende sogenannte Mobilfunk Gateways sind kommerziell erhältlich. Für das GSM-Netz gibt es GSM Gateways, die auf einer wählbaren Zahl von Kanälen Verbindungen mit lokalen stationären Mobilfunknetzen herstellen können.

Die Erfindung erlaubt es, dass der Insasse eines Fahrzeugs an Bord so telefoniert, als befände er sich am Boden im Bereich des entsprechenden Mobilfunknetzes. Für ihn fallen nur die Mobilfunk-Verbindungskosten an, die auch am Boden entstehen würden. Ist die Bodenstation im Bodenbereich des Heimatnetzes des Fahrzeuginsassen angeordnet, so kann er zu den geringen Kosten telefonieren, die bei einem solchen Telefonat im Heimatnetz anfallen. Zusätzlich können Kosten für die IP-Verbindung anfallen, die aber in der Regel von den Fluggesellschaften als einmalige Pauschale für die Nutzung der IP-Verbindung erhoben werden, unabhängig, zu welchem Zweck dies geschieht (Mobiltelefonieren, Nutzung des bordseitig zur Verfügung gestellten Internetzugangs oder dergleichen). Es können erfindungsgemäß mehrere Bodenstationen im Bereich der Mobilfunknetze verschiedener Länder vorgesehen sein. Da sich an Bord eines Flugzeugs in der Regel Passagiere aus verschiedenen Ländern aufhalten, kann sich so jeder Passagier über ein entsprechendes Gateway und die erfindungsgemäße Verbindung in sein Heimatnetz bzw. das jeweils kostengünstigste Mobilfunknetz einbuchen.

Die bodenseitige Sende-/Empfangsstation für die IP-Daten einerseits sowie die Einrichtungen zum Konvertieren der IP-Daten in Mobilfunk-Daten und Mobilfunk-Gate Ways andererseits können räumlich voneinander getrennt und beispielsweise über das Internet miteinander verbunden sein. Eine einzige bodenseitige Sende-/Empfangsstation für IP-Daten kann daher auch mit räumlich voneinander getrennten und beispielsweise im Bereich verschiedener stationärer Mobilfunknetze befindliche Einrichtungen zum Konvertieren in Mobilfunk-Daten sowie Mobilfunk-Gateways verbunden sein.

An Bord des Fahrzeugs wird bevorzugt eine Mobilfunk-Picozelle gebildet. Es handelt sich um eine sehr kleinräumige Zelle, die Basisstation benötigt dementsprechend nur eine sehr geringe Sendeleistung. An Bord größerer Fahrzeuge, beispielsweise großer Flugzeuge oder Schiffe können gegebenenfalls mehrere Mobilfunk-Picozellen gebildet werden.

Die Verbindung zwischen der bordseitigen Mobilfunk-Basisstation und der bordseitigen Sende-/Empfangsstation für IP-Daten kann über das Intranet des Fahrzeugs erfolgen. Da bei Flugzeugen in der Regel ein Intranet sowie eine IP-Datensende-/Empfangsstation sowieso vorhanden bzw. in der Nachrüstung begriffen ist, erfordert eine Nachrüstung mit dem erfindungsgemäßen System bordseitig somit nur noch die Mobilfunk-Basisstation sowie die Einrichtung zum Konvertieren der Mobilfunk-Daten in das IP-Protokoll und umgekehrt.

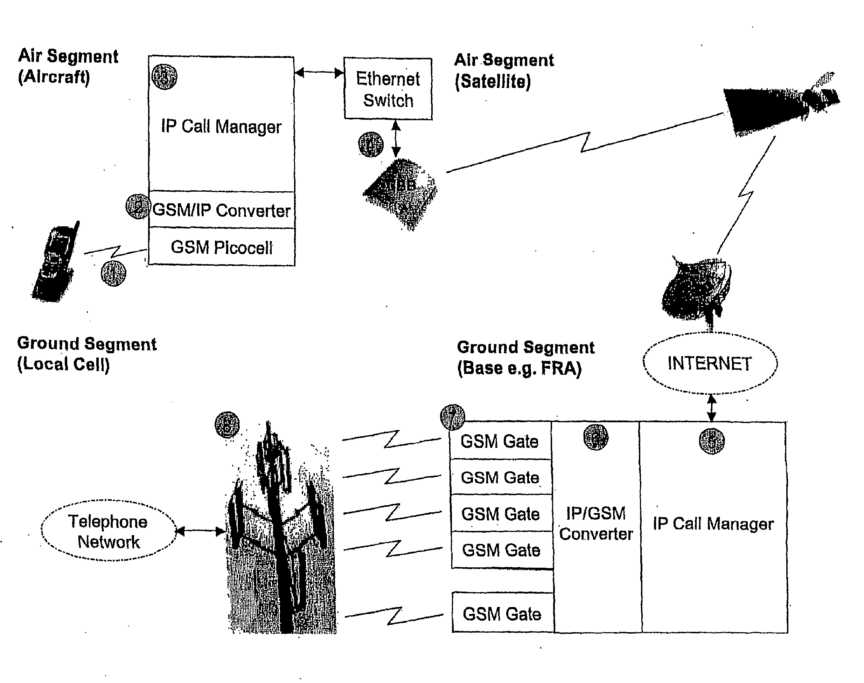

Die Erfindung wird im folgenden anhand der Zeichnung erläutert, die schematisch eine erfindungsgemäße Anordnung zeigt.

An Bord eines Flugzeuges ist eine GSM-Basisstation 1 angeordnet, die eine GSM-Picozelle bildet. Die Basisstation 1 ist über das bordseitige Intranet mit einem GSM-/IP-Converter 2 verbunden, der die GSM-Daten in IP-Daten umsetzt und umgekehrt. Ein IP call manager 3 speist die IP-Telefoniedaten in das Intranet bzw. Ethernet des Flugzeugs ein bzw. entnimmt dem Netz die entsprechenden empfangenen IP-Telefoniedaten. Über eine bei 4 angedeutete bordseitige Antenne erfolgt über einen Satelliten die Verbindung mit einer Bodenstation. Die Sende-/Empfangsstation am Boden ist über das Internet mit einem IP call manager 5 verbunden, der die entsprechenden IP-Daten aus dem Internet gewissermaßen filtert und über einen IP/GSM-Converter 6 wieder in GSM-Daten umsetzt. An den IP-/ GSM-Converter 6 sind GSM Gateways 7 angeschlossen, die die Verbindung zum stationären Mobilfunknetz 8 herstellen. Der geschilderte Ablauf ist entsprechend umgekehrt für GSM-Daten, die aus dem stationären Mobilfunknetz 8 zu einem Mobiltelefon an Bord des Flugzeuges geschickt werden.

## Patentansprüche

1. Anordnung zur Verbindung eines an Bord eines Luft-, Land-, Wasser- oder Raumfahrzeugs befindlichen Mobiltelefons mit einem stationären Mobilfunknetz (8), die aufweist:
- stationär:
a) eine Einrichtung zum Senden/Empfangen von IP-Daten an eine/von einer entsprechenden Einrichtung des Fahrzeugs,
b) eine Einrichtung (6) zum Konvertieren der IP-Daten in Mobilfunk-Daten und umgekehrt,
c) eine Einrichtung (7) zum Senden/Empfangen der Mobilfunk-Daten an das/von dem stationären Mobilfunknetz;
**dadurch gekennzeichnet, dass** sie weiterhin aufweist
- an Bord des Fahrzeugs:
d) eine Einrichtung (4) zum Senden/Empfangen von IP-Daten an eine/von einer Bodenstation,
e) wenigstens eine Mobilfunk-Basisstation,
f) eine Einrichtung (2) zum Konvertieren der Mobilfunk-Daten in das IP-Protokoll und umgekehrt.

2. Anordnung nach Anspruch 1, **dadurch gekennzeichnet, dass** die Mobilfunk-Basisstation (1) an Bord des Fahrzeugs eine Mobilfunk-Picozelle bildet.

3. Anordnung nach Anspruch 1 oder 2, **dadurch gekennzeichnet, dass** die Verbindung zwischen der Einrichtung b) und der Einrichtung c) über das Intranet des Fahrzeugs erfolgt.

4. Anordnung nach einem der Ansprüche 1 bis 3, **dadurch gekennzeichnet, dass** die Einrichtung b) einen IP call manager (3) aufweist.

5. Anordnung nach einem der Ansprüche 1 bis 4, **dadurch gekennzeichnet, dass** die Einrichtung c) zum Senden/Empfangen über ein oder mehrere Vermittlungsstationen ausgebildet ist.

6. Anordnung nach Anspruch 5, **dadurch gekennzeichnet, dass** die Vermittlungsstationen Satelliten umfassen.

7. Anordnung nach einem der Ansprüche 1 bis 6, **dadurch gekennzeichnet, dass** die Einrichtung d) zum Senden/Empfangen über ein oder mehrere Vermittlungsstationen ausgebildet ist.

8. Anordnung nach Anspruch 7, **dadurch gekennzeichnet, dass** die Vermittlungsstationen Satelliten umfassen.

9. Anordnung nach einem der Ansprüche 1 bis 8, **dadurch gekennzeichnet, dass** die Verbindung zwischen der Einrichtung d) und der Einrichtung e) über das Internet erfolgt.

10. Anordnung nach einem der Ansprüche 1 bis 9, **dadurch gekennzeichnet, dass** die Einrichtung e) einen IP call manager (5) aufweist.

11. Anordnung nach einem der Ansprüche 1 bis 10, **dadurch gekennzeichnet, dass** die Einrichtung f) die Mobilfunk-Daten drahtlos oder leistungsgebunden an das/aus dem stationäre(n) Mobil- funknetz (8) sendet/empfängt.

12. Anordnung nach einem der Ansprüche 1 bis 11, **dadurch gekennzeichnet, dass** sie mehrere Einrichtungen e) und f) aufweist, die räumlich voneinander beabstandet im Bereich verschiedener stationärer Mobilfunknetze (8) angeordnet sind.

13. Verfahren zum Verbinden eines an Bord eines Luft-, Land-, Wasser- oder Raumfahrzeugs befindlichen Mobiltelefons mit einem stationären Mobilfunknetz (8), mit den Schritten:
aa) Einloggen des Mobiltelefons in eine lokale Mobilfunkzelle, die von einer an Bord des Fahrzeugs angeordneten Mobilfunk-Basisstation (1) gebildet wird;
bb) Konvertieren der Mobilfunk-Daten in das IP-Protokoll und umgekehrt;
cc) Senden/Empfangen der IP-Daten an eine/von einer Bodenstation;
ee) Konvertieren der IP-Daten in Mobilfunk-Daten und umgekehrt;
ff) Senden/Empfangen der Mobilfunk-Daten an das/von dem stationären Mobilfunknetz.

## Claims

1. An arrangement for connecting a cellular phone located in an aircraft, land vehicle, sea- or spacecraft to a stationary mobile radio network (8) which exhibits the following:
- at a stationary position:
a) a device for transmitting/receiving IP data to/from a corresponding device of the vehicle,
b) a device (6) for converting the IP data into mobile radio data and conversely,
c) a device (7) for transmitting/receiving the mobile radio data to/from the stationary mobile radio network;
**characterized in that** it also exhibits
- on board the vehicle:
d) a device (4) for transmitting/receiving IP data to/from a ground station,
e) at least one mobile radio base station,
f) a device (2) for converting the mobile radio data into the IP protocol and conversely.

2. The arrangement as claimed in claim 1, **characterized in that** the mobile radio base station (1) forms a mobile radio pico cell on board the vehicle.

3. The arrangement as claimed in claim 1 or 2, **characterized in that** the connection between the device b) and the device c) is established via the intranet of the vehicle.

4. The arrangement as claimed in one of claims 1 to 3, **characterized in that** the device b) has an IP call manager (3).

5. The arrangement as claimed in one of claims 1 to 4, **characterized in that** the device c) is constructed for transmitting/receiving via one or more switching stations.

6. The arrangement as claimed in claim 5, **characterized in that** the switching stations comprise satellites.

7. The arrangement as claimed in one of claims 1 to 6, **characterized in that** the device d) is constructed for transmitting/receiving via one or more switching stations.

8. The arrangement as claimed in claim 7, **characterized in that** the switching stations comprise satellites.

9. The arrangement as claimed in one of claims 1 to 8, **characterized in that** the connection between the device d) and the device e) is established via the Internet.

10. The arrangement as claimed in one of claims 1 to 9, **characterized in that** the device e) has an IP call manager (5).

11. The arrangement as claimed in one of claims 1 to 10, **characterized in that** the device f) transmits/receives the mobile radio data wirelessly or wire-connected to/from the stationary mobile radio network (8).

12. The arrangement as claimed in one of claims 1 to 11, **characterized in that** it has a number of devices e) and f) which are arranged spatially spaced apart in the area of different stationary mobile radio networks (8).

13. A method for connecting a cellular phone located in an aircraft, land vehicle, sea- or spacecraft to a stationary mobile radio network (8), comprising the following steps:
aa) logging-in of the cellular phone at a local mobile radio cell which is formed by a mobile radio base station (1) arranged on board the vehicle;
bb) converting the mobile radio data into the IP protocol and conversely;
cc) transmitting/receiving the IP data to/from a ground station;
ee) converting the IP data into mobile radio data and conversely;
ff) transmitting/receiving the mobile radio data to/from the stationary mobile radio network.

## Revendications

1. Agencement destiné à relier un téléphone mobile, embarqué à bord d'un aéronef, d'un véhicule routier, d'un bateau ou d'un véhicule spatial, avec un réseau de téléphonie mobile (8) stationnaire, lequel agencement comporte :
- sous forme stationnaire :
a) un dispositif d'émission et de réception de données IP vers ou depuis un dispositif correspondant du véhicule,
b) un dispositif (6) pour convertir les données IP en données de téléphonie mobile et inversement,
c) un dispositif (7) d'émission et de réception de données de téléphonie mobile vers ou depuis un réseau de téléphonie mobile stationnaire ;
**caractérisé en ce qu'**il comporte en outre
- à bord du véhicule :
d) un dispositif (4) d'émission et de réception de données IP vers ou depuis une station au sol ;
e) au moins une station de base de téléphonie mobile,
f) un dispositif (2) pour convertir les données de téléphonie mobile dans le protocole IP et inversement.

2. Agencement selon la revendication 1, **caractérisé en ce que** la station de base de téléphonie mobile (1) constitue à bord du véhicule une pico-cellule de téléphonie mobile.

3. Agencement selon la revendication 1 ou 2, **caractérisé en ce que** la liaison entre le dispositif b) et le dispositif c) s'effectue par l'intermédiaire de l'Intranet du véhicule.

4. Agencement selon l'une quelconque des revendications 1 à 3, **caractérisé en ce que** le dispositif b) comporte un gestionnaire d'appel IP (3).

5. Agencement selon l'une quelconque des revendications 1 à 4, **caractérisé en ce que** le dispositif c) d'émission et de réception est formé par une ou plusieurs stations de transmission.

6. Agencement selon la revendication 5, **caractérisé en ce que** les stations de transmission comportent des satellites.

7. Agencement selon l'une quelconque des revendications 1 à 6, **caractérisé en ce que** le dispositif d) d'émission et de réception est formé par une ou plusieurs stations de transmission.

8. Agencement selon la revendication 7, **caractérisé en ce que** les stations de transmission comprennent des satellites.

9. Agencement selon l'une quelconque des revendications 1 à 8, **caractérisé en ce que** la liaison entre le dispositif d) et le dispositif e) s'effectue par Internet.

10. Agencement selon l'une quelconque des revendications 1 à 9, **caractérisé en ce que** le dispositif e) comporte un gestionnaire d'appel IP (5).

11. Agencement selon l'une quelconque des revendications 1 à 10, **caractérisé en ce que** le dispositif f) émet et reçoit les données de téléphonie mobile sans fil ou avec une liaison de puissance vers et depuis le réseau de téléphonie mobile (8) stationnaire.

12. Agencement selon l'une quelconque des revendications 1 à 11, **caractérisé en ce qu'**il comporte plusieurs dispositifs e) et f), qui sont situés à distance spatiale les uns des autres dans la zone de différents réseaux de téléphonie mobile (8) stationnaires.

13. Procédé destiné à relier un téléphone mobile, embarqué à bord d'un aéronef, d'un véhicule routier, d'un bateau ou d'un véhicule spatial, avec un réseau de téléphonie mobile (8) stationnaire, comportant les étapes suivantes :
aa) entrée en connexion du téléphone mobile dans une cellule locale de téléphonie mobile, qui est formée par une station de base de téléphonie mobile (1) agencée à bord du véhicule ;
bb) conversion des données de téléphonie mobile dans le protocole IP et inversement ;
cc) émission et réception des données IP vers et depuis une station au sol ;
ee) conversion des données IP en données de téléphonie mobile et inversement ;
ff) émission et réception des données de téléphonie mobile vers et depuis le réseau de téléphonie mobile stationnaire.
